# EUROPEAN PATENT APPLICATION

(11) **EP 2 767 556 A1**
(43) Date of publication of application: **20.08.2014**
(21) Application number: 14155087.1
(22) Date of filing: 13.02.2014
(51) Int. Cl.: C08J 9/14

(54) **Reactive cell opener composition, polyol composition, and open-celled polyurethane foam**

(30) Priority: 15.02.2013 KR 20130016147
(71) Applicant: LG Electronics, Inc., Seoul 150-721 (KR)
(72) Inventor: Kim, Youngbae, 641-110 Kyungsangnam-do (KR); Kim, Soyoon, 641-110 Kyungsangnam-do (KR); Ahn, Wonsool, 641-110 Kyungsangnam-do (KR); Soh, Jaehyun, 641-110 Kyungsangnam-do (KR)
(74) Representative: Greenaway, Martin William

(57) **Abstract**

The present invention relates to a reactive cell opener composition that includes a base oil, and a metal salt of a fatty acid having a hydroxyl group coupled to an isocyanate group. The invention also relates to a polyol composition that includes a polyol, a foam stabilizer, and a cell opener mixed with each other. The present invention also relates to an open-celled polyurethane foam manufactured from a polyol composition.

## Description

### CROSS-REFERENCE TO RELATED APPLICATION

This application claims the priority benefit of Korean Patent Application No. 10-2013-0016147, filed on February 15, 2013 in the Korean Intellectual Property Office, the disclosure of which is incorporated herein by reference.

### BACKGROUND

### Field of the disclosure

The present invention generally relates to a reactive cell opener composition, a polyol composition, and an open-celled polyurethane foam manufactured from the polyol composition.

### Description of the Related Art

Closed-celled rigid polyurethane foam is widely used in construction, piping and home appliances, such as refrigerators. Closed-celled rigid polyurethane foam is also used as a heat insulation material for use in refrigeration systems because the closed-celled rigid polyurethane foam has superior mechanical and heat insulation properties along with good machinability. The rigid polyurethane foam has a thermal conductivity of about 0.025 W/mK. Thus, the rigid polyurethane foam has the smallest thermal conductivity among the heat insulation materials commercially available for use at room temperatures.

The rigid polyurethane foam is generally formed by a one-shot method. In the one-shot method, an A solution and a B solution are mixed with each other to form the rigid polyurethane foam. The A solution includes a polyol, a catalyst, a foam stabilizer, and a blowing agent. The B solution mainly includes a polyisocyanate compound.

The heat insulation properties of the closed-celled rigid polyurethane foam is determined by three factors: (1) the thermal conductivity of a matrix solid; (2) the conductivity of gas filling cells by a blowing agent; and (3) the conductivity due to radiation. Among these, the thermal conductivity of the matrix solid and the thermal conductivity due to the radiation are considerably smaller than the heat conductivity of the blowing agent. Thus, the thermal conductivity of the rigid polyurethane foam is largely influenced by the heat conductivity of the blowing agent gas filled in the cells. The blowing agent is used in the method for manufacturing the closed-celled rigid polyurethane foam. Derivatives of fluorine-containing compounds having superior foaming properties and low thermal conductivities, such as chloro fluoro carbons (CFCs), were widely used for the blowing agent. However, derivatives of fluorine-containing compounds were later determined to be associated with global warming. Accordingly, halogen free blowing agents, such as cyclopentane, have been recently used.

More recently, there has been considerable interest in the development of energy efficient materials due to increasing worldwide energy demands. As stated above, it is difficult to lower the heat conductivity of the closed-celled rigid polyurethane foam to below the heat conductivity of the blowing agent. Thus, as an alternative, a vacuum insulation panel (VIP) has been receiving attention. The vacuum insulation panel includes a core material, a getter and a film sealing/packing member where a metal is laminated. Among these, the core material may include inorganic materials, such as glass fiber, perlite, etc, or organic materials, such as an open-celled rigid polyurethane foam. However, the heat insulation material of the inorganic material, such as a glass fiber, has a relatively high density, is difficult to process, and is not environment-friendly. Contrary to this, the organic material, such as the open-celled rigid polyurethane foam, does not have the above problems and is economically feasible.

When the open-celled rigid polyurethane foam is used as the core material of the vacuum insulation panel, it is necessary to maintain the low thermal conductivity for a long period of time. The low thermal conductivity is largely dependent on the cell size of the foam. The conventional open-celled rigid polyurethane foam has a size of the cell of several-hundred microns. In the above cell size, the vacuum insulation panel can have a required heat insulation property at a high-degree vacuum of more than 1.013 mbar. However, it takes a long period of time to make the high-degree vacuum and is not economically feasible. Therefore, in the open-celled rigid polyurethane foam used for the core material of the vacuum insulation panel, reduction of the cell size is crucial.

When the open-celled rigid polyurethane foam is used for the core material of the vacuum insulation panel, a second factor is an open cell content. If there are closed cells in the foam, even in a small amount, the blowing agent gas inside the cells will leak to the core material as time goes on. This is true even though the heat insulation property of the initial state may be high. Accordingly, vacuum pressure of the vacuum insulation panel foam is reduced, thereby deteriorating the heat insulation property of the foam.

For cell openers used for manufacturing the open-celled rigid polyurethane foam, a cell opener of a liquid type and a cell opener of a solid-powder type are generally used. However, the cell opener of the liquid type may induce a system instability by accelerating a reaction velocity. Thus, the cell structure of the foam is non-uniform, and negatively affects the thermal conductivity. In the case of the cell opener of the solid-powder type, mechanical abrasion due to the inorganic materials may be induced and dispersiblity may be deteriorated by the solid powders.

### BRIEF SUMMARY OF THE INVENTION

Therefore, the present invention has been made in order to solve one or more of the above problems. It is an object of the present invention to provide a cell opener composition that overcomes non-uniform foam due to the cell opener being composed of a liquid type. Another object of the present invention is to provide a cell opener composition that overcomes mechanical abrasion and low dispersibility due to the cell opener being composed of a solid-powder type.

According to an aspect of the present invention, there is provided a reactive cell opener composition for use as a novel polyurethane foam that effectively open cells during the foaming process by reacting with an isocyanate compound, which is chemically coupled to a main chain of a polyurethane.

According to another aspect of the present invention, there is provided a polyol composition that includes a reactive cell opener and a polyurethane foam obtained by the polyol composition, which has a high open cell content.

According to yet another aspect of the present invention, the reactive cell opener composition includes a base oil, and a reactive cell opener that includes a metal salt of a fatty acid having a hydroxyl group coupled to an isocyanate group.

The metal salt of the fatty acid having the hydroxyl group may be formed by a reaction between a fatty acid having the hydroxyl group and a metal hydroxide.

The fatty acid having the hydroxyl group may be a saturated or an unsaturated fatty acid having about 8 to 30 carbon atoms.

The hydroxyl group may include a secondary hydroxyl group.

The fatty acid having the hydroxyl group may include a 12-hydroxystearic acid (12HSA).

The metal salt may include a metal of lithium or calcium.

The base oil may include a silicone oil surfactant.

An amount of the metal salt of a fatty acid may be about 10 to 50 wt% based on a total weight of the reactive cell opener composition.

A polyol composition according to an embodiment of the invention includes a polyol, a foam stabilizer, and a cell opener mixed with each other. The cell opener includes a metal salt of a fatty acid having a hydroxyl group coupled to an isocyanate group.

The cell opener may be added and mixed with the polyol composition in any state of the cell opener composition, including a cell opener and a base oil mixed with each other.

The base oil may be used for the foam stabilizer.

The foam stabilizer may be included in an amount of about 0.5 to 5.0 parts by weight based on 100 parts by weight of the polyol composition.

The cell opener may be included in an amount of about 0.2 to 3.0 parts by weight based on 100 parts by weight of the polyol composition.

The polyol composition may further include a blowing agent.

The polyol composition may have a hydroxyl value of about 350 to 450 mgKOH/g.

An open-celled polyurethane foam, according to an embodiment of the present invention, is formed by reacting a polyol composition, including a polyol, and a cell opener mixed with each other and a polyisocyanate composition, including a polyisocyanate compound. The open-celled polyurethane foam includes a reactive cell opener that includes a metal salt of a fatty acid having a hydroxyl group coupled to an isocyanate group.

The cell opener may include the metal salt of the fatty acid having the hydroxyl group coupled to the isocyanate group. A part or an entire portion of the cell opener may be coupled to the polyurethane chain by reacting with the isocyanate group.

The open-cell polyurethane may have an open cell content of about 80% or more.

The open-cell polyurethane may have an open cell content of about 90% or more.

The open-celled polyurethane foam may include cells having an average size of about 100 *µ*m or less.

The open-celled polyurethane foam may be used for a building structure, a shock-absorption material, or a core material of a vacuum insulation panel.

The metal salt may include a metal of lithium.

An open-celled polyurethane foam, according to another embodiment of the present invention, is formed by reacting a polyol composition, including a polyol, and a cell opener mixed with each other and a polyisocyanate composition, including a polyisocyanate compound. The open-celled polyurethane foam includes a metal salt.

The metal salt may include a metal of lithium.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a picture of grease (having a solid content of 30 wt%) composed of Li 12-hydroxystearate and silicone oil, manufactured according to Manufacturing Example 1, wherein the silicone oil is used for the base oil.
FIGS. 2(a)-2(c) are scanning electrode microscope (SEM) images of rigid polyurethane foams, obtained by Comparative Example 1, Experimental Example 1, and Experimental Example 2, respectively.

### DETAILED DESCRIPTION OF THE EMBODIMENTS

Hereinafter, the present invention will be described in detail.

The present invention provides a reactive cell opener composition including a base oil and a reactive cell opener. The reactive cell opener is a metal salt of a fatty acid having a hydroxyl group that is able to be coupled to an isocyanate group. In the present invention, the base oil may be formed of a silicone oil surfactant. Then, the reactive cell opener composition may be a mixed composition of a grease type, and thus, the dispersibility is maintained to a molecular level. Also, the cell opener is chemically coupled to a main chain of the polyurethane by a reaction between the hydroxyl group (-OH) of the reactive cell opener and an isocyanate group (-NCO) during a process for forming a polyurethane foam, thereby effectively performing cell-opening at the molecular level. Therefore, problems of system instability and non-uniform cell generation, which may be induced by formulation problem when a conventional cell opener of a liquid type is used, can be avoided. Also, problems of dispersibility and mechanical abrasion, which are induced when a conventional cell opener of a solid-powder type is used, can be avoided. In addition, the opening of the cell can be effectively performed in a small amount in the cell opener of the present invention.

The material of the base oil is not limited. The base oil may include a material that the reactive cell opener, which is the metal salt of a fatty acid, can be dispersed well. For example, the base oil may be formed of a surfactant of an oil type. Preferably, the base oil may include a material that is the same as the surfactant included in a polyol composition, which will be described later. For example, the base oil may include a silicone oil surfactant. The silicone oil surfactant may have various types and kinds, and thus, the invention is not limited thereto.

The reactive cell opener is the metal salt of the fatty acid having the hydroxyl group that can be coupled to the isocyanate group. The synthetic method is not limited. For example, the reactive cell opener of the metal salt of the fatty acid having the hydroxyl group may be formed by reacting a fatty acid having the hydroxyl group and a metal hydroxide. A metal salt separately synthesized may be added to the composition, or a neutralization reaction may be induced in the state that the fatty acid and the metal hydroxide may be added to the base oil.

In this instance, the fatty acid may be a saturated or an unsaturated fatty acid having about 8 to 30 carbon atoms. It is preferable that the fatty acid may be a saturated fatty acid. For example, the saturated fatty acid may be a caprylic acid (C8), a capric acid (C10), a lauric acid (C12), a myristic acid (C14), a palmitic acid (C16), a stearic acid (C18), an arachidic acid (C20), a behenic acid (C22), or lignoceric acid (C24). The hydroxyl group may be a primary hydroxyl group positioned at an end (or a terminal) of the fatty acid. Selectively, the hydroxyl group may be a secondary hydroxyl group positioned between a hydrocarbon group of the fatty acid. For example, the hydroxyl group may be a 12-hydroxystearic acid (12HSA).

The present invention is not limited to the metal hydroxide. For example, the metal hydroxide may be a lithium hydroxide (LiOH), a sodium hydroxide (NaOH) , a potassium hydroxide (KOH), or a calcium hydroxide (Ca(OH)₂). Thus, the metal salt of the fatty acid may include a metal of lithium, sodium, potassium, or calcium.

An amount of the reactive cell opener having the metal salt of a fatty acid may be about 10 to 50 wt% based on a total weight of the reactive cell opener composition. When the amount is below about 10 wt%, an amount of the cell opener composition increases so that a concentration of the cell opener necessary to the polyol composition for forming the polyurethane foam can be satisfied. Then, the increased amount of the base oil may induce instability of the foaming system. When the amount is above about 50 wt%, a concentration of the reactive cell opener in the cell opener composition may excessively increase. Then, viscosity of the composition increases, and thus, the dispersion of the cell opener to the base oil to the molecular level may be difficult.

In addition, the present invention provides a polyol composition, including a polyol, and a cell opener that are mixed with each other. The cell opener is a metal salt of a fatty acid having a hydroxyl group that can be coupled to an isocyanate group.

In this instance, the cell opener may be the above-mentioned cell opener, and thus, the detailed description will be omitted. The cell opener may directly be added to the polyol composition. Selectively, the cell opener may be added and mixed with the polyol composition with any state of a cell opener composition, including the cell opener and the base oil being mixed with each other. It is preferable that the cell opener is added with the state of the cell opener composition having the base oil in an aspect to the dispersion of the cell opener. As stated above, the base oil of the cell opener composition may be preferably a component of the polyol composition, and may be a silicone oil surfactant.

The polyol composition forms a polyurethane foam by reaction with a polyisocyanate composition. The polyol composition may have the known formulation used for forming the polyurethane foam. The polyol composition for manufacturing a closed-celled rigid polyurethane foam, which is optimized to be used for an insulation material (or an adiabatic material), may also be used. In addition, the polyol formulation used for manufacturing the open-celled rigid polyurethane foam may be used. The polyol may include a polyol that is the main component, a surfactant used for a foam stabilizer, a catalyst, a nucleating agent, a blowing agent, the cell opener, and so on. In this instance, the surfactant and the cell opener are the components of the above-mentioned cell opener composition.

The polyol may also include a polyether polyol, which is generally used for manufacturing the rigid polyurethane foam. In this state, the polyol may include one kind of polyether polyol or a plurality of polyether polyols mixed with each other. An amount of the polyol may be about 70 to 95 wt% based on a total weight of the polyol composition. For example, the polyol may include a compound of alkylene glycols (for example, an ethylene glycol, a propylene glycol, a 1,4-butanediol, a 1,6-hexanediol, and so on), glycol ether (for example, a diethylene glycol, a triethylene glycol, a dipropylene glycol, a tripropylene glycol, and so on), glycerins, trimethylolpropane, a teritiary amine-containing polyol (for example, triethanolamine, triisopropanolamine, and a propylene oxide adduct and(or) an ethylene oxide adduct of ethylene diamine toluene diamine, and so on), polyether polyol, polyester polyol, and so on. The polyether polyol may be an alkylene oxide, such as, an ethylene oxide, a propylene oxide and an 1,2-butylene oxide, or a polymer of a mixture of the alkylene oxides. Preferably, the polyether may be a polymer of a mixture of a polypropylene oxide or a propylene oxide, and an ethylene oxide of a small amount (about 12 wt% or less). The polyether may be capped with an ethylene oxide of about 30wt% or less. The polyester polyol may also be used. The polyester polyol may include a reaction product of the polyol (preferably, diol), and polycarboxylic acid or polycarboxylic acid anhydride (preferably, dicarboxylic acid or dicarboxylic acid anhydride). The polycarboxylic acid or anhydride thereof may be aliphatic, aromatic, and(or) heterocyclic, and may include substituting halogen atoms. The polycarboxylic acid may be unsaturated. For example, for the polycarboxylic acid, a succinic acid, an adipic acid, a terephthalic acid, an isophthalic acid, a trimellitic anhydride, a phthalic anhydride, a maleic acid, an maleic anhydride, and/or a fumaric acid may be used. The polyol used for manufacturing the polyester polyol may have an equivalent of about 150 or less, and may include at least one ethylene glycol, such as an 1,2-propylene glycol, an 1,3-propylene glycol, an 1,4-butane diol, an 2,3-butane diol, an 1,6-hexane diol, an 1,8-octanediol, a neopentyl glycol, a cyclohexane dimethanol, an 2-methyl-1,3-propane diol, a glycerin, a trimethylol propane, an 1,2,6-hexane triol, an 1,2,4-butane triol, trimethylolethane, a pentaerytritol, a quinitol, a manitol, a sorbitol, a methyl glycoside, a diethylene glycol, a triethylene glycol, a tetraethylene glycol, a dipropylene glycol, a dibutylene glycol, and so on. Preferably, the polyol may have hydroxyl value of about 350 to 450 mgKOH/g. When the hydroxyl value is below about 350mgKOH/g, the manufactured polyurethane product may have a low hardness due to a low crosslink density during the reaction. When the hydroxyl value is above about 450mgKOH/g, the manufactured polyurethane product may be brittle due to excessively high crosslink density during the reaction.

The foam stabilizer may include one component or a mixture of at least two components mixed with each other in order to control the stability and the opening of the cells generated during the reaction. For example, the foam stabilizer may be a silicon-based surfactant, and may be the base oil of the above-mentioned reactive cell opener composition. For the surfactant used for the foam stabilizer, a material that is the same as the surfactant may be used for manufacturing the general rigid polyurethane foam with high heat insulation capacity. The surfactant may be formed of a mixture of one or more different kinds of surfactant materials in order to manufacture a form having fine-structural cells providing the heat insulation property. For example, a mixture of B-8462(Gold Schmidt Co.) and Niax L-6900 (Momentive Specialty Chemicals) may be used. The foam stabilizer (the base oil) may be included in an amount of about 0.5 to 5.0 parts by weight based on 100 parts by weight of the polyol. When the amount of the foam stabilizer is below about 0.5 parts by weight, the foam stabilizing property may be deteriorated or the size and the distribution of the cells may be non-uniform, due to the low concentration. When the amount of the foam stabilizer is above about 5. 0 parts by weight, the foaming failure may be induced according to the system instability by the large amount of the surfactant of the liquid type.

The cell opener may be included in an amount of about 0.2 to 3.0 parts by weight based on 100 parts by weight of the polyol. When the amount of the cell opener is below about 0.2 parts by weight, an open cell content may decrease due to the low concentration of the cell opener. When the amount of the cell opener is above about 3.0 parts by weight, the size and the distribution of the cells may be non-uniform due to the large amount of the cell opener. Also, since the cell opener of a solid type is included in a large amount, a mechanical abrasion may be induced.

A nucleating agent is used for enhancing the heat insulation property by reducing the cell size. The nucleating agent may be a perfluoroalkane-based compound. The nucleating agent may be included in an amount of about 1.0 to 5.0 parts by weight based on 100 parts by weight of the polyol.

The polyol composition may further include the blowing agent. The blowing agent may be a hydrocarbon-based physical blowing agent, such as cyclopentane. Cyclopentane is generally used as an environmental-friendly blowing agent and is halogen free. As necessary, a small amount of water may be used as a chemical blowing agent to be mixed with the physical blowing agent.

The polyol composition may further include the catalyst. Catalysts generally used for manufacturing a rigid polyurethane foam may be used in a suitable amount. One catalyst may be used, or a mixture of a plurality of catalysts may be used. The catalyst may be a basic amine (for example, an aliphatic secondary amine), an imidazole, an amidine, an alkanolamine, a Lewis acid, or a metal-organic compound (especially, tin-based metal organic compound) may be used. Also, an isocyanurate catalyst, such as a metal carboxylate (particularly, potassium acetate and a solution thereof), may be used.

Further, the present invention provides an open-celled polyurethane foam formed by reacting a polyol composition, including a polyol, and a cell opener mixed with each other and a polyisocyanate composition including a polyisocyanate compound. The cell opener is a metal salt of a fatty acid having a hydroxyl group that can be coupled to an isocyanate group. The polyol composition is described above, and the detailed descriptions will be omitted.

The open-celled polyurethane foam of the present invention has a relatively small sized cell (about 100*µ*m or less), compared with the conventional open-celled polyurethane foam. The open-celled polyurethane foam can have an open cell content of about 80% or more (more particularly, about 90% or more, and even about 98% or more). Thus, when the open-celled polyurethane foam of the present invention is applied to a core material of a vacuum insulation panel, effective heat-insulation property can be achieved at relatively low degree of vacuum. Also, the open-celled polyurethane foam of the present invention can be used for a building structure, a shock-absorption material, or a core material of a vacuum insulation panel with superior properties. It is expected that the effects of the invention are generated by chemically coupling the cell opener to the polyurethane chain by using the reactive cell opener, which is the metal salt of the fatty acid having the hydroxyl group coupled to the isocyanate group.

The polyisocyanate composition includes a polyisocyanate compound. The polyisocyanate compound refers to a compound that has at least two isocyanate groups. Any polyisocyanate compound may be used that is generally used for manufacturing a rigid polyurethane foam. For example, the polyisocyanate compound may include at least one isocyanate selected from the group consisting of: diphenyl methane diisocyanate (MDI), olunene diisocyanate (TDI), hexamethylene diisocyanate (HDI), dicyclohexylmethane diisocyanate (H12MD1), and isoporonediisocyanate (IPDI). Also, a product obtained by a chemical reaction of a modified multifunctional isocyanate (that is, an organic diisocyanate and/or an organic polyisocyanate) may be used for the polyisocyanate compound. As an example, the organic diisocyanate and/or the organic polyisocyanate having an uretdion group, a carbamate group, an isocyanurate group, a carbodiimide group, an allophanate group, and/or an urethane group may be selected. The polyisocyanate has a NCO% value of about 25% to 35%.

Hereinafter, the present invention will be described in detail through using manufacturing examples and embodiments. The after-mentioned detailed descriptions are just exemplified in order to help understanding the present invention. However, the present invention is not limited thereto.

### [Manufacturing Example 1] Manufacturing a reactive cell opener composition

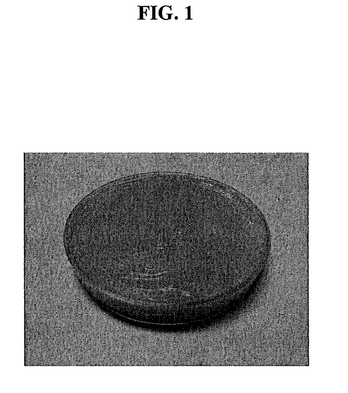

700g of silicone oil, which is used as a surfactant used in a formulation for manufacturing a polyurethane foam, and 277.9g of a 12-hydroxy stearic acid (12HSA) were added to a reaction vessel with a size of 3L, and were heated to a temperature of about 100°C while they were stirred to about 1880 to 3600 rpm. A solution of 22.1g of a lithium hydroxide (LiOH) was dissolved in 100ml of distilled water at about 70°C and was slowly added to the above solution in the reaction vessel during a 30 minute time period to induce an acid-base neutralization reaction. After confirming the completion of the reaction, the temperature of the reaction vessel was gradually increased to about 200°C, and was stirred for 1 hour to completely eliminate the moisture of the reaction product. Then, the reacted material was slowly cooled to about 60°C, and was post-processed using a roll mill and a filter. As such, a mixed composition of a grease type having the surfactant and the reactive cell opener was manufactured. The mixed composition has a solid content of about 30wt%. In Table 1, molecular weights, amounts, and composition ratios of the lithium hydroxide, the 12HSA, and the silicone oil surfactant are shown. A picture of the mixed composition obtained from the Manufacturing Example 1 is shown in FIG. 1.

**[Table 1]**

| | Molecular weight [g/mole] | Amount [g] | Composition ratio [wt%] |
|---|---|---|---|
| Lithium hydroxide | 23.9 | 22.1 | 30 wt% |
| 12HSA | 300 | 277.9 | |
| Silicone oil | - | 700.0 | 70 wt% |

### [Experimental Embodiments 1 and 2, Comparative Example 1] Manufacturing a rigid polyurethane foam

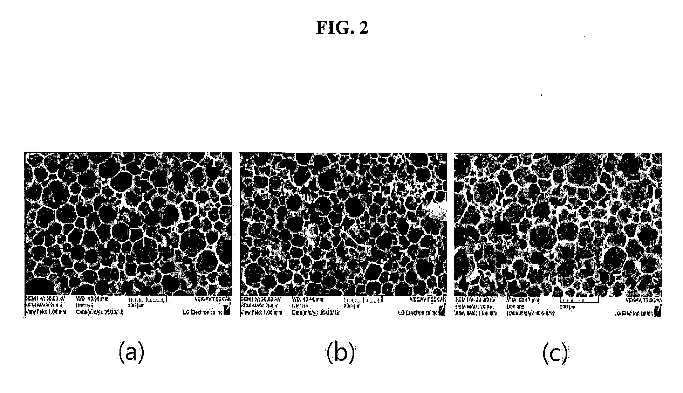

Materials in amounts (phr, parts per hundred resin), shown below in Table 2, were mixed at 25°C by using a mechanical mixer at a high RPM for about 4 to 5 seconds, and then, were poured to open molds having rectangular shapes of 20cm X 20cm to generate foams. Then, 24 hours of aging were performed. After the foams were manufactured, the foams were cut. A scanning electrode microscope (SEM) image of Comparative Example 1 is shown in FIG. 2(a). The SEM image of Experimental embodiment 1 is shown in FIG. 2(b), and the SEM picture of Experimental embodiment 1 is shown in FIG. 2 (c). Sizes of cells of the foams were measured by using the SEM images. The result of measured properties of the polyurethane foams according to Experimental Embodiments 1 and 2, and Comparative Example 1 are shown in FIG. 3.

**[Table 2]**

| | Component | | Comparative Example 1 [phr] | Experimental Embodiment 1 [phr] | Experimental Embodiment 2 [phr] |
|---|---|---|---|---|---|
| A | Polyol(OHV: 400 to 420 mgKOH/g) | | 100 | 100 | 100 |
| | Catalyst (amine/metal salt) | | 1.45 | 1.45 | 1.45 |
| | Foam stabilizer (silicone oil surfactant) | | 2.2 | 2.2 | 2.2 |
| | Nucleating agent (perfluoroalkane) | | 3.0 | 3.0 | 3.0 |
| | Blowing agent | H₂O | 2.0 | 2.0 | 2.0 |
| | | Cyclopentane | 16.5 | 16.5 | 16.5 |
| | Cell opener | 1-Butanol | 0 | 4.0 | 4.0 |
| | | Li 12HSA | 0 | 0 | 2.0 |
| B | polyisocyanate (NCO% 31.0□32%) | | | | |
| A/B | | | 100/123 | 100/123 | 100/123 |

**[Table 3]**

| Property | | Comparative Example 1 | Experimental Embodiment 1 | Experimental Embodiment 2 |
|---|---|---|---|---|
| Cell opener [phr] | 1-Butanol | 0.0 | 4.0 | 4.0 |
| | Li 12HSA | 0.0 | 0.0 | 2.0 |
| Cell size (*µ*m) | | ~ 90.0 | ~ 88.0 | ~ 92.0 |
| Open cell content [%] | | 9.7 | 10.5 | 98.0 |
| Bulk density [kg/m³] | | 54.2 | 54.5 | 52.2 |
| Compressive strength [kg/m²] | | 6.22 | 6.96 | 5.48 |
| k-factor [10⁻³ kcal/mhr°C] | | 26.55 | 26.40 | 27.13 |

As shown in FIG. 3, the open-celled rigid polyurethane foam, which was manufactured according to Comparative Example 1 without the cell opener, has an open cell content below 10%. Also, as shown in Experimental Embodiment 1, the 1-Butanol is not sufficient to act as the cell opener. On the other hand, as shown in Experimental Embodiment 2, which used the reactive cell opener, the open-celled rigid polyurethane foam can be manufactured without damage to the cell size and the mechanical properties.

In the present invention, a silicone oil surfactant is used for the base oil. Then, the reactive cell opener composition may be a mixed composition of a grease type, and thus, the dispersibility is maintained on a molecular level. Also, the cell opener is chemically coupled to a main chain of polyurethane, thereby effectively performing cell-opening on the molecular level. Therefore, the system instability and the non-uniform cell generation, which may be induced by formulation problems when a conventional cell opener of a liquid type is used, can be prevented. Also, problems of dispersibility and mechanical abrasion, induced during the process when a conventional cell opener of a solid-powder type is used, can be prevented. In addition, the opening of the cell can be effectively performed in a small amount in the cell opener of the present invention.

The open-celled polyurethane foam of the present invention has a relatively small sized cell and has a remarkably high open cell content. Thus, when the open-celled polyurethane foam of the present invention is applied to a core material of a vacuum insulation panel, effective heat-insulation property can be achieved at relatively low degree of vacuum. Also, the open-celled polyurethane foam of the present invention can be used for a building structure, a shock-absorption material, or a core material of a vacuum insulation panel with superior properties.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A reactive cell opener composition, comprising:
a base oil; and
a reactive cell opener comprising a metal salt of a fatty acid that has a hydroxyl group coupled to an isocyanate group.

2. The reactive cell opener composition according to claim 1, wherein the metal salt of the fatty acid that has the hydroxyl group is formed by a reaction between a fatty acid that has the hydroxyl group and a metal hydroxide.

3. The reactive cell opener composition according to claim 1, wherein the fatty acid that has the hydroxyl group is a saturated or an unsaturated fatty acid that has about 8 to 30 carbon atoms.

4. The reactive cell opener composition according to claim 1, wherein the hydroxyl group comprises a secondary hydroxyl group.

5. The reactive cell opener composition according to claim 1, wherein the fatty acid that has the hydroxyl group comprises a 12-hydroxystearic acid (12HSA).

6. The reactive cell opener composition according to claim 1, wherein the metal salt comprises a metal of lithium or calcium.

7. The reactive cell opener composition according to claim 1, wherein the base oil comprises a silicone oil surfactant.

8. The reactive cell opener composition according to claim 1, wherein an amount of the metal salt of a fatty acid is about 10 to 50 wt% based on a total weight of the reactive cell opener composition.

9. A polyol composition, comprising:
a polyol; and
a cell opener composition according to one of claims 1 to 8,
wherein the polyol and the cell opener composition are mixed with each other.

10. The polyol composition according to claim 9, wherein the base oil of the cell opener composition is used for a foam stabilizer.

11. The polyol composition according to claim 10, wherein the foam stabilizer is added in an amount of about 0.5 to 5.0 parts by weight based on 100 parts by weight of the polyol.

12. The polyol composition according to claim 9, wherein at least one of the following is fulfilled:
wherein the reactive cell opener is added in an amount of about 0.2 to 3.0 parts by weight based on 100 parts by weight of the polyol; andwherein the polyol has a hydroxyl value of about 350 to 450 mgKOH/g.

13. An open-celled polyurethane foam, wherein the open-celled polyurethane foam is formed by reacting a polyol composition according to one of claims 9 to 12 and a polyisocyanate composition comprising a polyisocyanate compound.

14. The open-celled polyurethane foam according to claim 13, wherein a part or an entire portion of the reactive cell opener is coupled to the polyurethane chain by a reaction with the isocyanate group.

15. The open-celled polyurethane foam according to claim 13, wherein at least one of the following is fulfilled for the open-celled polyurethane foam:
wherein the open-celled polyurethane foam has an open cell content of about 80% or more;
wherein the open-celled polyurethane foam comprises cells having an average size of about 100 *µ*m or less; and
wherein the metal salt comprises a metal of lithium.
